# EUROPÄISCHE PATENTSCHRIFT

(11) **EP 1 918 565 B1**
(45) Veröffentlichungstag und Bekanntmachung des Hinweises auf die Patenterteilung: **31.08.2016**
(21) Anmeldenummer: 07020364.1
(22) Anmeldetag: 18.10.2007
(51) Int. Cl.: F02K 9/95, F02K 9/94, H01T 13/20

(54) **Zünderanode für wiederzündbare Raketenbrennkammern**
Ignition anode for re-ignitable rocket thrust chambers
Anode d'amorce pour chambres de combustion de fusées réamorçables

(30) Priorität: 02.11.2006 DE 102006052171
(43) Veröffentlichungstag der Anmeldung: 07.05.2008
(73) Patentinhaber: Airbus DS GmbH, 82024 Taufkirchen (DE)
(72) Erfinder: Unrath, Dieter, 74214 Schöntal (Kloster) (DE)
(74) Vertreter: Frenkel, Matthias Alexander

(56) Entgegenhaltungen:
- EP-A2- 0 350 152
- EP-A2- 1 515 594
- DE-A1- 4 140 834
- DE-A1-102004 032 723
- JP-A- 63 208 654
- US-A- 5 563 469
- US-A- 5 821 676

## Beschreibung

Die Erfindung betrifft eine Zünderanode insbesondere für wiederzündbare Raketenbrennkammern nach dem Oberbegriff des Anspruchs 1.

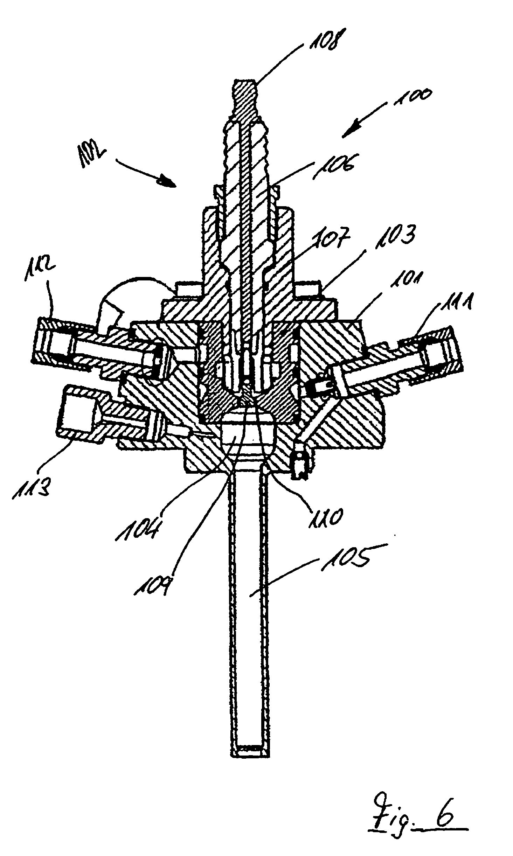

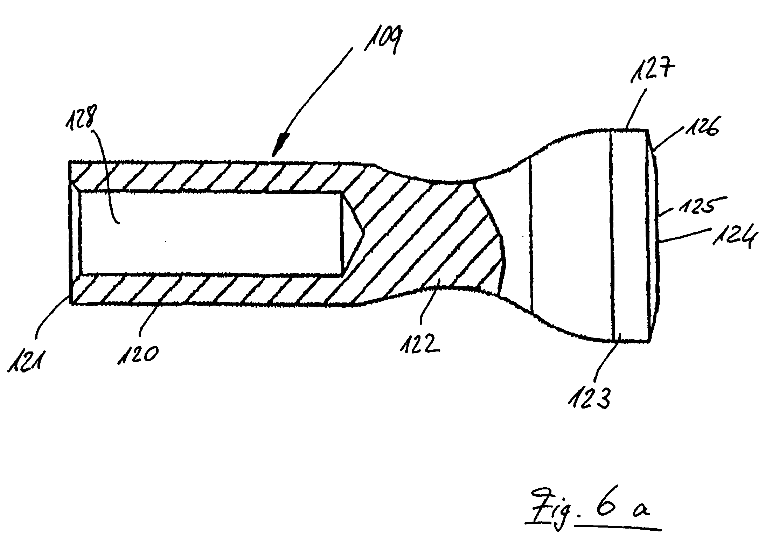

Aus dem Stand der Technik ist ein Zündsystem der Firma Stork ® Product Engineering B.V. unter dem Namen EGOX/GH2 VINCI EM Igniter bekannt. Es handelt sich hierbei um einen Zünder für wiederzündbare Raketenbrennkammern, wobei mittels einer elektrischen Zündung ein gasförmiges Wasserstoff-Sauerstoffgemisch gezündet wird. Ein derartiger Zünder 100 ist in einer Längsschnittdarstellung in der Figur 6 schematisch gezeigt.

Der Zünder 100 besitzt ein Zündergehäuse 101 und eine Zündkerzeneinrichtung 102. Im Zündergehäuse 101 sitzt ein Zündereinspritzkopf 103, der zusammen mit dem Zündergehäuse 101 eine Zündmischkammer 104 bildet. Die Zündmischkammer 104 mündet in ein Zündflammrohr 105, welches in die Brennkammer der zu zündenden Rakete ragt. Die Zündkerzeneinrichtung 102 besitzt eine Zündkerze 106, welche in einem Zündkerzenklemmring 107 angeordnet ist. Die Zündkerze 106 besitzt ein Anschlussende 108 zur Verbindung mit einer Zündspannungsquelle (nicht gezeigt). Gegenüberliegend zum Anschlussende 108 sitzt eine Zünderanode 109, welche zusammen mit dem Zündereinspritzkopf 103 einen Ringspalt 110 bildet und mit ihrer Stirnseite in die Zündmischkammer 104 weist. Am Zündergehäuse 101 ist ein Anschlussstutzen 111 für eine Wasserstoffzuführung und ein Anschlussstutzen 112 für eine Sauerstoffzuführung angebracht. Weiterhin sind Messvorrichtungen 113 vorgesehen, beispielsweise um eine Zündmischkammerwandtemperatur zu messen.

Die Zünderanode 109 gemäß dem Stand der Technik ist in Figur 6a in einem Teillängsschnitt vergrößert dargestellt. Die Zünderanode 109 besitzt einen im Wesentlichen zylindrischen Grundkörper 120 mit einem ersten freien Ende 121. Gegenüberliegend zum ersten freien Ende 121 geht der zylindrische Grundkörper 120 in einen eingeschnürten Abschnitt 122 über, welcher sich zunächst verengt und zu einem Anodenkopfabschnitt 123 hin erweitert, wobei der Anodenkopfabschnitt 123 einen im Vergleich zum zylindrischen Grundköper 120 vergrößerten Durchmesser besitzt. Der Anodenkopfabschnitt 123 besitzt ein freies Ende 124, welches durch eine plane Stirnfläche 125 und eine stumpfwinklige Anfasung 126 gebildet wird. Das freie Ende 124 besitzt somit eine einzige Ringkante 126a. Die plane Stirnfläche 125 und die flachwinklige Anfasung 126 bilden eine Zündstirnfläche, die im zusammengebauten Zustand in die Zündermischkammer 104 weist. Eine Außenseite 127 des Anodenkopfabschnittes 123 bildet zusammen mit einer korrespondierenden Bohrung im Zündeinspritzkopf 103 den Ringspalt 110. Vom freien Ende 121 her besitzt die Zündanode 109 im zylindrischen Grundkörper 120 eine Sacklochausnehmung 128 mittels der sie mit geeigneten Befestigungsmitteln zusammenwirkend mit der Zündkerze 106 verbunden ist.

Ein derartiger Zünder für wiederzündbare Raketenbrennkammern hat sich bewährt. Bei einer Vielzahl von Wiederzündvorgängen der Raketenbrennkammer ist jedoch eine fortschreitende Erosion an der Zündstirnfläche zu beobachten. Ebenso ist ein erhöhter Verschleiß in Folge von Abbrand festzustellen. Beim Abschalten der Raketenbrennkammer bildet sich eine Oxidschicht an der Zündstirnfläche, welche beim Wiederzünden der Brennkammer das Hochlaufen des Plasmafunkens verschlechtert. Hieraus resultiert ein mögliches erhöhtes Funktionsrisiko.

Ferner sind aus dem Stand der Technik verschiedene Weiterbildungen von Zündanodenflächen bekannt, die eine Strukturierung der Zündanodenflächen vorsehen.

Die US 5,563,469 offenbart eine Zünderanode, auf deren Oberfläche verschiedene Schichten von Edelmetallen aufgebracht sind. In diese aufgebrachten Schichten sind Vertiefungen hineingeschnitten worden. Diese Vertiefungen durchlaufen dabei die gesamte Zünderanode mit einer gleichmäßigen Tiefe.

Die DE 41 40 834 A1 offenbart eine Zündkerze für Verbrennungsmotoren. Bei dieser Zündkerze sind Vertiefungen in der Zündanode eingebracht, die als radial auswärts laufende Vertiefungen oder konzentrische Vertiefungs-Kreise mit jeweils konstanter Tiefe ausgebildet sind.

Die DE 10 2004 032 723 A1 offenbart eine Zündkerze, in deren Zünderanoden Vertiefungen mit unterschiedlichen Geometrien und mit jeweils konstanter Tiefe ausgebildet sind.

Die US 5,821,676 offenbart eine Zünderanode, die als Kegelstumpf mit Vertiefungen mit konstanter Tiefe an der Kegelmantelfläche ausgebildet ist.

Weiterhin offenbart die EP 0 350 152 A2 eine Zündkerze für den Einsatz mit Raketentreibstoff.

Die EP 1 515 594 A2 offenbart eine Zündkerze zur Plasmazündung, mit mehreren Spitzen auf der Zünderanodenfläche.

Aufgabe der Erfindung ist es daher, eine Zünderanode für wiederzündbare Raketenbrennkammern anzugeben, welche eine verminderte Neigung zu Erosionsschäden an der Zündstirnfläche und einen verminderten Abbrand der Zündstirnfläche bei fortschreitendem Zünderbetrieb besitzt. Weiterhin soll bei fortschreitender Betriebsdauer ein gleichmäßigerer Anodenabbrand über die Zündstirnfläche erzielt werden. Außerdem soll eine erhöhte Sicherheit des Wiederzündens im Flugbetrieb sichergestellt werden, so dass ein Funktionsrisiko des Zünders minimiert ist.

Diese Aufgabe werden mit einer Zünderanode, mit den Merkmalen des Anspruchs 1 gelöst. Vorteilhafte Ausführungsformen sind in den Unteransprüchen angegeben.

Bei der Erfindung ist von besonderem Vorteil, dass durch eine unebene, insbesondere scharfkantig unebene Stirnflächengestaltung der Zünderanode mit zumindest einer insbesondere scharfkantigen, gratfreien Kante ein sogenanntes Hochlaufen des Plasmafunkens beim Wiederzünden erheblich erleichtert wird, auch wenn eine Oxidschicht an der Zündstirnfläche vorhanden ist. Der Grund hierfür wird darin gesehen, dass ein Plasmafunke leichter an einer Kante, insbesondere scharfkantigen, gratfreien Kante durchschlägt als an einer flachen Oberfläche. Weiterhin wird als vorteilhaft angesehen, dass durch das Vorsehen einer Vielzahl, das heißt mehr als einer Kante, bevorzugt scharfkantigen Kanten der Zündfunke immer wieder an unterschiedlichen Stellen an der Zündanodenstirnfläche durchschlägt und somit auch an unterschiedlichen Stellen für Abbrand sorgt. Die Verteilung, an welchen Stellen der Zündfunke durchschlägt ist dabei derart, dass bevorzugt an der Kante, die den engsten Zündspalt bildet der Funke durchschlägt. Wird eine Kante durch Abbrand etwas abgetragen, bildet eine andere Kante den engsten Zündspalt und ist somit die Kante an der der Funke am wahrscheinlichsten überspringt. Hierdurch gelingt es, einen gleichmäßigen Abbrand der Anode durch Funkenbildung an der jeweils erhabensten Kante der Stirnfläche zu erreichen. Weiterhin existiert wegen der Unebenheiten eine vergrößerte Zündstirnfläche. Insbesondere durch V-Kerben kann eine definierte Vergrößerung der Oberfläche erreicht werden. Hieraus resultiert somit über die Betriebsdauer ein wesentlich verbessertes Funkendurchschlagen auf den Kanten, was insgesamt das Funktionsrisiko des Zünders minimiert.

Im Folgenden wird die Erfindung anhand der Zeichnung beispielhaft näher erläutert:

Es zeigen
- Figur 1:: eine erfindungsgemäße Zünderanode in einer Perspektivansicht;
- Figur 2:: die Zünderanode gemäß Figur 1 in einer Seitenansicht;
- Figur 3:: die Zünderanode gemäß Figur 1 in einer Ansicht auf die Zünderstirnseite;
- Figur 4:: die Zünderanode gemäß Figur 1 in einem Längsschnitt;
- Figur 5:: die Zünderanode gemäß Figur 1 in einem Detailschnitt im Bereich des Zündanodenkopfes entlang der Linie C-C aus Figur 4;
- Figur 6:: Stand der Technik;
- Figur 6a:: Stand der Technik.

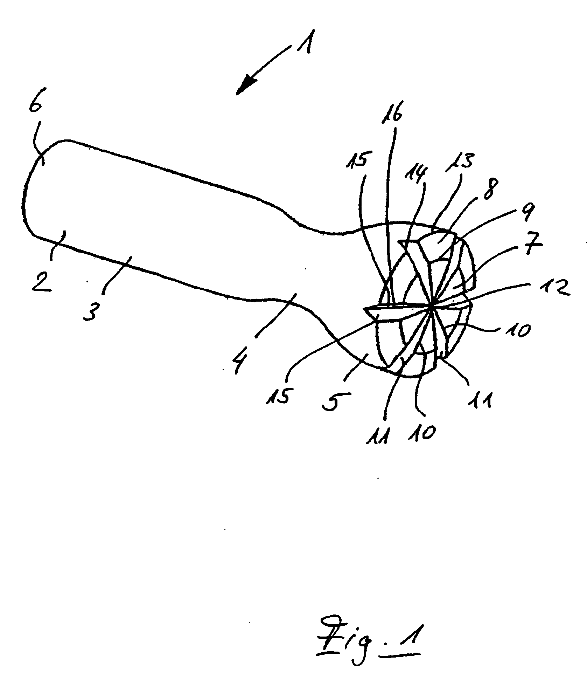

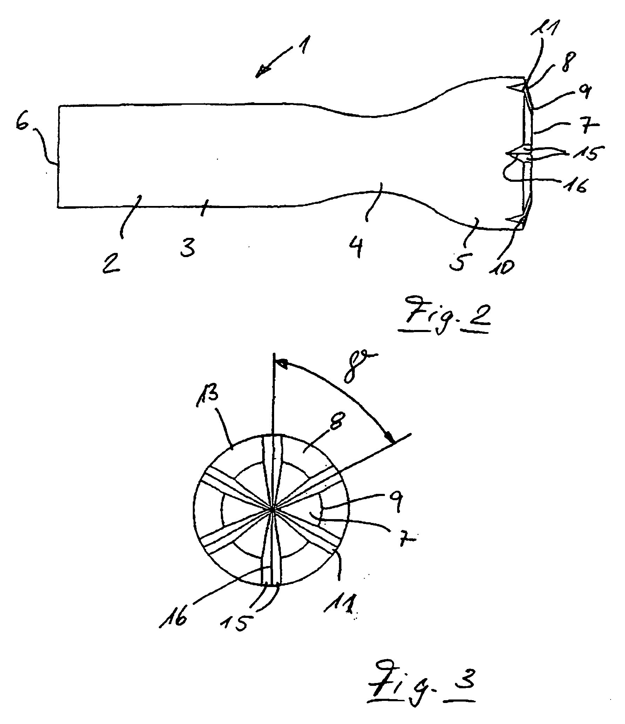

Eine erfindungsgemäße Zünderanode 1 besitzt einen Zünderanodenkörper 2 mit einem Zylinderabschnitt 3 mit einem eingeschnürten Abschnitt 4 und einem Anodenkopfabschnitt 5. Der Anodenkopfabschnitt 5 besitzt einen größeren Durchmesser als der Zylinderabschnitt 3. Der Zylinderabschnitt 3 weist ein freies Ende 6 auf. Gegenüberliegend zum freien Ende 6 besitzt der Anodenkopfabschnitt 5 eine Anodenstirnfläche 7. Die Anodenstirnfläche 7 besitzt randlich umlaufend eine flache Anfasung 8, so dass eine Ringkante 9 ausgebildet ist. Erfindungsgemäß weist die Anodenstirnfläche 7 und die Anfasung 8 eine Vielzahl von Kanten 10 auf, welche im Ausführungsbeispiel gemäß der Figuren 1 bis 5 durch eine Vielzahl von Vertiefungen 11 gebildet sind. Selbstverständlich kann eine Vielzahl von weiteren Kanten 10 auch durch eine Vielzahl von Erhebungen (nicht gezeigt), welche über die Anodenstirnfläche 7 herausragen, gebildet sein. Die Vertiefungen 11 und Erhebungen (nicht gezeigt) können regelmäßig und/oder unregelmäßig über die Anodenstirnfläche 7 verteilt angeordnet sein.

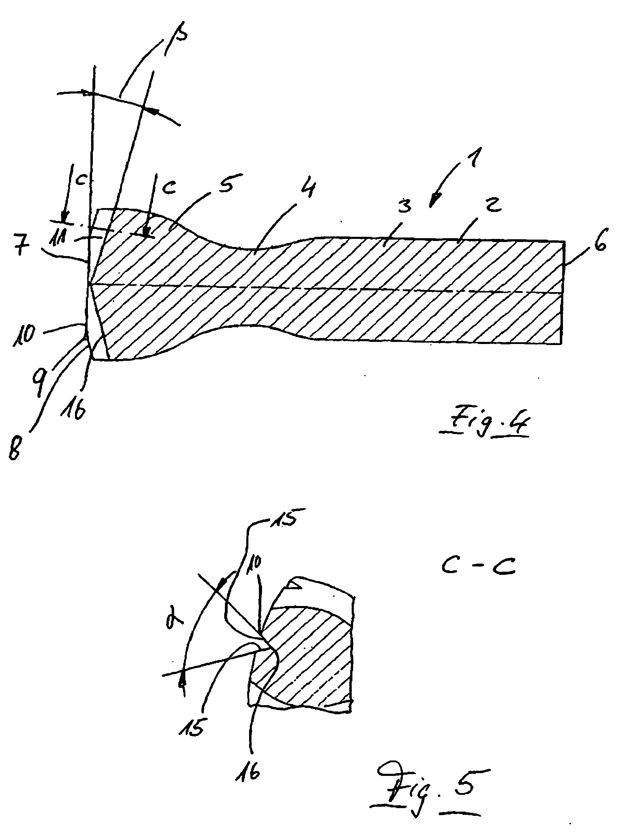

Im Ausführungsbeispiel gemäß Figur 1 sind die Vertiefungen im Querschnitt V-förmig ausgebildet und erstrecken sich von einem Zentrum 12 der Anodenstirnfläche 7 radial nach außen, so dass in einem Randbereich 13 des Anodenkopfabschnittes 5 V-förmige Ausschnitte 14 vorhanden sind. Die Vertiefungen 11 sind im Ausführungsbeispiel gemäß Figuren 1 bis 5 regelmäßig strahlenförmig über die Oberfläche der Zünderanodenstirnseite verteilt angeordnet und weisen zwischen sich jeweils einen Winkel γ von 60° auf. Jede Vertiefung 11 besitzt geneigte Begrenzungswandungen 15, welche den V-förmigen Querschnitt der Vertiefung ausbilden und sich im Bereich einer Vertiefungsgrundlinie 16 treffen. Die Vertiefungsgrundlinie 16 verläuft vom Zentrum 12 der Anodenstirnfläche 7 geneigt zum Randbereich 13 des Anodenkopfabschnittes 5 hin, insbesondere um einen Winkel β geneigt, wobei der Winkel β 10° bis 20°, insbesondere 12° bis 17°, besonders bevorzugt 15° beträgt. Besonders bevorzugt ist der Winkel β derart gewählt, dass die Grundlinie 16 in einem Längsschnitt gemäß Figur 4 durch die Zünderanode 1 parallel zur Anfasung 8 verläuft. Hierdurch wird erreicht, dass die Vertiefungen 11 in Radialrichtung nach außen ab der Ringkante 9 eine konstante Tiefe besitzen.

Um ein Hochlaufen bzw. Durchschlagen eines Plasmafunkens sicherzustellen, sind die Kanten 10, welche durch die Vertiefungen 11, die Anodenstirnfläche 7 und die Anfasungen 8 gebildet werden, scharfkantig, insbesondere gratfrei scharfkantig ausgebildet. Als besonders bevorzugtes Maß für die Gratfreiheit hat sich der Bereich von 0 mm bis +0,1 mm, insbesondere 0 mm bis 0,02 mm bewährt.

Weiterhin hat sich als vorteilhaft herausgestellt, dass die Grundlinien 16 der Vertiefungen einen Übergang aufweisen, wobei der Übergang etwa 0 mm bis +0,1 mm, insbesondere 0 mm bis +0,5 mm beträgt. Für die Wahl eines Wandungswinkels α zwischen den Wandungen 15 einer V-förmigen Vertiefung 11 hat sich ein Bereich von 45° bis 75° bewährt, wobei ein Bereich von 55° bis 65°, insbesondere 60° bevorzugt ist. Hierdurch entstehen stumpfwinklige Kanten 10, die aber wesentlich spitzwinkliger sind als die umlaufende Ringkante 9. Der Plasmafunke schlägt bei derart ausgebildeten Kanten 10 überraschend leicht durch und sorgt für ein sicheres Zünden bzw. Wiederzünden der Raketenbrennkammer.

Bei der Erfindung ist von besonderem Vorteil, das durch das Vorsehen einer Vielzahl von Kanten 10, welche als bevorzugte Durchschlagsorte für Plasmafunken fungieren, eine erhöhte Zündsicherheit erreicht ist. Weiterhin ist aufgrund der Vielzahl der vorhandenen Vertiefung 11 (Kerben) und hieraus resultierenden Kanten 10 eine gleichmäßige Abnutzung der Zünderanode 1 gewährleistet, weil auftretende Erosion durch Plasmafunken gleichmäßig über die Zünderanodenstirnfläche 7 und die Anfasung 8 verteilt erfolgt.

Erfindungswesentlich ist, das ein Vielzahl von Kanten 10 zur Verfügung gestellt wird, wobei die Kanten 10, wie im Ausführungsbeispiel gemäß den Figuren 1 bis 5 durch Vertiefungen 11 gebildet werden. Gleichwohl ist es jedoch auch möglich, weitere Kanten 10 durch gleichmäßig oder ungleichmäßig verteilte Erhebungen aus der A-nodenstirnfläche 7, 9 zur Verfügung zu stellen. Ebenfalls können die Vertiefungen 11 wie auch die Erhebungen gleichmäßig oder ungleichmäßig über die Anodenstirnfläche 7, 8 verteilt angeordnet sein. Neben dem in den Figuren 1 bis 5 dargestellten regelmäßig sternförmigen Anordungsmuster der Vertiefungen 11 sind auch gitterförmige oder anderweitig rasterförmige Anordnungen, z.B. mit quadratischem, rechteckigem oder rautenförmigem Rastermuster möglich. Dies gilt selbstverständlich auch für eventuell vorgesehene Erhebungen.

Weiterhin kann eine unregelmäßig aus Erhebungen und Vertiefungen 11 geformte Oberfläche der Anodenstirnfläche 7, 8 ausgebildet werden, beispielsweise in dem die Anodenstirnfläche 7 als Bruchfläche (nicht gezeigt) ausgebildet ist. Zur Herstellung einer solchen Bruchfläche könnte beispielsweise vorgesehen sein, zunächst einen symmetrischen Körper bestehend aus zwei zylindrischen Abschnitten 3, zwei eingeschnürten Abschnitten 4 und zwei Anodenkopfabschnitten 5 herzustellen, welche im Bereich der Anodenkopfstirnfläche 7 miteinander verbunden sind. Anschließend könnte die Anfasung 8 in Form eines Einstiches eingebracht werden und an dieser Kerbstelle die beiden Körper gewaltsam gebrochen werden, so dass im Bereich der Zünderanodenstirnfläche 7 eine unregelmäßige Bruchkontur entsteht. Diese Bruchkontur ist durch scharfkantige Erhebungen und Vertiefungen gekennzeichnet, welche eine Vielzahl von Kanten zur Verfügung stellt, um ein sicheres Zünden bzw. Hochlaufen des Plasmafunkens zu gewährleisten.

Weiterhin ist bei der Erfindung von Vorteil, das durch eine Führung des Hochspannungsfunkens entlang der Kanten 10, insbesondere entlang der Kerbkanten ein gleichmäßigerer Anodenabbrand erfolgt. Die Sicherheit der Wiederzündung ist erhöht, so dass ein geringeres Funktionsrisiko gegenüber dem Stand der Technik verwirklicht ist. Bei symmetrischer Anordnung der Kanten 10 über die Oberfläche der Anodenstirnfläche 7 ist ein symmetrischer Abbrand der Anode 1 aufgrund der Funkenführung an den Kanten 10 gewährleistet. Weiterhin ist eine Vergrößerung der Anodenstirnfläche durch die Kerben und Kanten 10 gegeben.

### Bezugszeichenliste

- 1: Zünderanode
- 2: Zünderanodenkörper
- 3: zylindrischer Abschnitt
- 4: eingeschnürten Abschnitt
- 5: Anodenkopfabschnitt
- 6: freies Ende
- 7: Anodenstirnfläche
- 8: flache Anfasung
- 9: Ringkante
- 10: Kanten
- 11: Vertiefungen
- 12: Zentrum
- 13: Randbereich
- 14: V-förmige Ausschnitte
- 15: Begrenzungswandungen
- 16: Vertiefungsgrundlinie
- 100: Zünder
- 101: Zündergehäuse
- 102: Zündkerzenvorrichtung bzw. Zündkerzeneinrichtung
- 103: Zündereinspritzkopf
- 104: Zündbrennkammer
- 105: Zündflammrohr
- 106: Zündkerze
- 107: Zündkerzenklemmring
- 108: Anschlussende
- 109: Zünderanonde
- 110: Ringspalt
- 111: Anschlussstutzen für Wasserstoffzuführung
- 112: Anschlussstutzen für Sauerstoffzuführung
- 113: Messvorrichtungen
- 120: zylindrischer Grundkörper
- 121: freies Ende
- 122: eingeschnürter Abschnitt
- 123: Andodenkopfabschnitt
- 124: freies Ende
- 125: plane Stirnfläche bzw. Anodenstirnfläche
- 126: flachwinklige Anfasung
- 126a: Ringkante
- 127: Außenseite
- 128: Sacklochausnehmung

## Patentansprüche

1. Zünderanode, insbesondere für eine Zündeinrichtung einer wiederzündbaren Raketenbrennkammer, mit einem rotationssymmetrischen Zünderanodenkörper (2) mit einer Symmetrieachse, der eine Anodenstirnfläche (7, 8) mit einer die Symmetrieachse randlich umlaufenden Anfasung (8) unter Ausbildung einer Ringkante (9) aufweist, wobei die Anodenstirnfläche (7, 8) zusätzlich zu der Ringkante (9) eine Vielzahl von Kanten (10) aufweist die, ausgehend von der Symmetrieachse, durch radial nach außen verlaufende Vertiefungen (11) in der Zünderanodenstirnfläche (7, 8) gebildet sind, **dadurch gekennzeichnet, dass** die Vertiefungen (11) sich radial nach außen vertiefend ausgebildet sind.

2. Zünderanode nach Anspruch 1, **dadurch gekennzeichnet, dass** die Kanten (10) scharfkantig ausgebildet sind.

3. Zünderanode nach Anspruch 1 und/oder 2, **dadurch gekennzeichnet, dass** die Kanten gratfrei bis +0,1 mm, insbesondere gratfrei bis +0,02 mm ausgebildet sind.

4. Zünderanode nach einem oder mehreren der vorangegangenen Ansprüche, **dadurch gekennzeichnet, dass** weitere Kanten (10) durch Vorsprünge in der Zünderanodenstirnfläche (7, 8) gebildet sind.

5. Zünderanode nach einem oder mehreren der vorangegangenen Ansprüche, **dadurch gekennzeichnet, dass** die Vertiefungen (11) im Querschnitt V-förmig ausgebildet sind und einen Wandungswinkel α von 45° bis 75°, besonders bevorzugt von 55° bis 65°, insbesondere 60° haben.

6. Zünderanode nach einem oder mehreren der vorangegangenen Ansprüche, **dadurch gekennzeichnet, dass** die Vertiefungen (11) gleichmäßig über die Zünderanodenstirnfläche (7, 8) verteilt sind und sternförmig von einem Zentrum (12) der Zünderanodenstirnfläche (7, 8) radial nach außen verlaufen.

7. Zünderanode nach einem oder mehreren der vorangegangenen Ansprüche, **dadurch gekennzeichnet, dass** ein Winkel β zwischen einer Grundlinie (16) der Vertiefung (11) und der Zünderanodenstirnfläche (7) 10° bis 20°, insbesondere 12° bis 17°, besonders bevorzugt 15° beträgt.

8. Zünderanode nach einem oder mehreren der vorangegangenen Ansprüche, **dadurch gekennzeichnet, dass** ein Winkel γ zwischen zwei benachbarten Vertiefungen (11) in radialer Richtung 60° beträgt.

9. Zünderanode nach einem oder mehreren der vorangegangenen Ansprüche, **dadurch gekennzeichnet, dass** Grundlinien (16) im Bereich des Grundes der Vertiefungen (11) einen Übergang bis +0,1 mm, insbesondere bis +0,05 mm besitzen.

10. Zünderanode nach einem oder mehreren der vorangegangenen Ansprüche, **dadurch gekennzeichnet, dass** der Zünderanodenkörper (2) einen zylindrischen Abschnitt (3), einen abgeschnürten Abschnitt (4) und einen Anodenkopfabschnitt (5) aufweist.

11. Zünderanode nach einem oder mehreren der vorangegangenen Ansprüche, **dadurch gekennzeichnet, dass** der Anodenkopfabschnitt (5) im Durchmesser größer ist als der zylindrische Abschnitt (3).

12. Zünderanode nach einem oder mehreren der vorangegangenen Ansprüche, **dadurch gekennzeichnet, dass** die Zündanodenstirnfläche (7) randlich umlaufend eine flache Anfasung (8) aufweist, so dass eine Ringkante (9) gebildet ist.

13. Zünderanode nach einem oder mehreren der vorangegangenen Ansprüche, **dadurch gekennzeichnet, dass** die Zünderanode (1) als Massivkörper ausgebildet ist.

## Claims

1. An ignition anode, in particular for an ignition device of a reignitable rocket combustion chamber, the ignition anode having a rotationally symmetric ignition anode body (2) with an axis of symmetry, the ignition anode body comprising an anode frontal area (7, 8) having a chamfer (8) surrounding a periphery of the axis of symmetry and forming an annular edge (9), wherein the anode frontal area (7, 8) includes a plurality of edges (10) in addition to the annular edge (9) which are formed, originating from the axis of symmetry, by a plurality of radially oriented recesses (11) in the ignition anode frontal area (7, 8), **characterized in that** the recesses (11) are deeper in a radially outward area.

2. The ignition anode of claim 1, **characterized in that** the edges (10) are sharpedged.

3. The ignition anode of claim 1 and/or 2, **characterized in that** the edges are burr-free of about 0.1 mm or less, in particular burr-free of 0.02 mm or less.

4. The ignition anode of one or more of the previous claims, **characterized in that** additional edges (10) are formed by projections in the anode frontal area (7, 8).

5. The ignition anode of one or more of the previous claims, **characterized in that** the recesses (11) have a V-shaped cross section and a wall angle α between 45° and 75°, in particular between 55° and 65°, in particular 60°.

6. The ignition anode of one or more of the previous claims, **characterized in that** the recesses (11) are uniformly distributed over the ignition anode frontal area (7, 8) and, in a star-shaped manner, oriented radially outwards from a center of the ignition anode frontal area (7, 8).

7. The ignition anode of one or more of the previous claims, **characterized in that** an angle β between a base line (16) of the recess (11) and the ignition anode frontal area (7) is 10° to 20°, in particular 12° to 17°, particularly 15°.

8. The ignition anode of one or more of the previous claims, **characterized in that** an angle γ between two adjacent recesses (11) in radial direction is 60°.

9. The ignition anode of one or more of the previous claims, **characterized in that** base lines (16) around bottom portions of the recesses (11) have a width of 0.1 mm or less, in particular of 0.05 mm or less.

10. The ignition anode of one or more of the previous claims, **characterized in that** the ignition anode body (12) comprises a cylindrical section (3), a constricted section (4), and an anode head section (5).

11. The ignition anode of one or more of the previous claims, **characterized in that** the anode head section (5) is larger in diameter than the cylindrical section (3).

12. The ignition anode of one or more of the previous claims, **characterized in that** the ignition anode frontal area (7) comprises a chamfer (8) arranged at a periphery, thereby defining an annular edge (9).

13. The ignition anode of one or more of the previous claims, **characterized in that** the ignition anode (1) is a solid body.

## Revendications

1. Anode d'allumeur, en particulier pour un dispositif d'allumage d'une chambre de combustion de fusée réallumable, comportant un corps (2) d'anode d'allumeur à symétrie de révolution, possédant un axe de symétrie, qui comprend une face frontale (7, 8) d'anode avec un chanfrein (8) s'étendant périphériquement autour de l'axe de symétrie en formant une arête annulaire (9), la face frontale (7, 8) d'anode comprenant en plus de l'arête annulaire (9) une pluralité d'arêtes (10) qui, partant de l'axe de symétrie, sont formées par des renfoncements (11) s'étendant radialement vers l'extérieur dans la face frontale d'anode d'allumeur (7, 8), **caractérisée en ce que** les renfoncements (11) sont réalisés de manière à se creuser radialement vers l'extérieur.

2. Anode d'allumeur selon la revendication 1, **caractérisée en ce que** les arêtes (10) sont réalisées à angles vifs.

3. Anode d'allumeur selon la revendication 1 et/ou 2, **caractérisée en ce que** les arêtes sont réalisées sans bavures jusqu'à +0,1 mm, en particulier sans bavures jusqu'à +0,02 mm.

4. Anode d'allumeur selon l'une ou plusieurs des revendications précédentes, **caractérisée en ce que** d'autres arêtes (10) sont formées par des saillies dans la face frontale (7, 8) d'anode d'allumeur.

5. Anode d'allumeur selon l'une ou plusieurs des revendications précédentes, **caractérisée en ce que** les renfoncements (11) sont réalisés en forme de V en coupe transversale et ont un angle entre parois α de 45° à 75°, de façon plus préférée de 55° à 65°, en particulier de 60°.

6. Anode d'allumeur selon l'une ou plusieurs des revendications précédentes, **caractérisée en ce que** les renfoncements (11) sont répartis uniformément sur la face frontale (7, 8) d'anode d'allumeur et s'étendent radialement vers l'extérieur en étoile depuis un centre (12) de la face frontale (7, 8) d'anode d'allumeur.

7. Anode d'allumeur selon l'une ou plusieurs des revendications précédentes, **caractérisée en ce qu'**un angle β entre une ligne de fond (16) du renfoncement (11) et la face frontale (7) d'anode d'allumeur est de 10° à 20°, notamment de 12° à 17°, de façon plus préférée de 15°.

8. Anode d'allumeur selon l'une ou plusieurs des revendications précédentes, **caractérisée en ce qu'**un angle γ entre deux renfoncements (11) adjacents est de 60° en direction radiale.

9. Anode d'allumeur selon l'une ou plusieurs des revendications précédentes, **caractérisée en ce que** les lignes de fond (16) dans la zone du fond des renfoncements (11) possèdent une transition allant jusqu'à +0,1 mm, en particulier jusqu'à +0,05 mm.

10. Anode d'allumeur selon l'une ou plusieurs des revendications précédentes, **caractérisée en ce que** le corps (2) d'anode d'allumeur présente une partie cylindrique (3), une partie étranglée (4) et une partie tête d'anode (5).

11. Anode d'allumeur selon l'une ou plusieurs des revendications précédentes, **caractérisée en ce que** la partie tête d'anode (5) possède un diamètre plus grand que la partie cylindrique (3).

12. Anode d'allumeur selon l'une ou plusieurs des revendications précédentes, **caractérisée en ce que** la face frontale (7) d'anode d'allumeur comprend un chanfrein plat (8) périphérique, de sorte qu'une arête annulaire (9) est formée.

13. Anode d'allumeur selon l'une ou plusieurs des revendications précédentes, **caractérisée en ce que** l'anode d'allumeur (1) est réalisée sous la forme d'un corps massif.
